(19) Europäisches Patentamt
European Patent Office
Office européen des brevets

(11) **EP 3 133 621 A1**

(12) **EUROPEAN PATENT APPLICATION**
published in accordance with Art. 153(4) EPC

(43) Date of publication:
**22.02.2017 Bulletin 2017/08**

(21) Application number: **15812932.0**

(22) Date of filing: **26.06.2015**

(51) Int Cl.:
**H01G 9/00** (2006.01)

(86) International application number:
**PCT/CN2015/082491**

(87) International publication number:
**WO 2016/206088 (29.12.2016 Gazette 2016/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Southwest Petroleum University Sichuan 610500 (CN)**

(72) Inventors:
• **LIU, Hongqi**
  **Chengdu**
  **Sichuan 610512 (CN)**

• **DENG, Youming**
  **Chengdu**
  **Sichuan 610512 (CN)**
• **TIAN, Jie**
  **Chengdu**
  **Sichuan 610512 (CN)**
• **QIU, Chunning**
  **Chengdu**
  **Sichuan 610512 (CN)**

(74) Representative: **Sun, Yiming**
  **HUASUN Patent- und Rechtsanwälte**
  **Friedrichstraße 33**
  **80801 München (DE)**

(54) **SINGLE-ION CAPACITOR, MICRO-CAPACITOR AND ION CAPACITOR**

(57)    The invention provides a single ion capacitor, a micro capacitor and an ion capacitor. The single ion capacitor is a capacitor formed by using a single water molecule as a medium and having a single positive ion and a single negative ion on both ends of the single water molecule under the action of an electric field; the micro capacitor is a capacitor formed by using rock particles wrapping water films as a medium and having a single positive ion sheath and a single negative ion sheath on both ends of the rock particles wrapping water films; and the ion capacitor comprises the said single ion capacitor and the said micro capacitor. The invention can help further study the change rules of rock capacitance.

Fig. 1

## Description

### Field of the Invention

The invention relates to the material field, in particular to a single ion capacitor, a micro capacitor and an ion capacitor.

### Description of the Related Art

Most materials in nature are dielectrics. The conduction effect of current of macro materials under the action of an applied electric field is measured by conductivity. Macro materials can be classified by conductivity as follows: the macro materials are called conductors when $\sigma > 10^5 \Omega^{-1} \cdot cm^{-1}$, the macro materials are called insulators when $\sigma < 10^{-10} \Omega^{-1} \cdot cm^{-1}$, the macro materials are called semi-conductors when $10^{-10} < \sigma < 10^5 \Omega^{-1} \cdot cm^{-1}$. The electric polarization effect of macro materials under the action of an electric field can be measured by dielectric constant (permittivity) $\varepsilon$. Vacuum dielectric constant is equal to 1. In general, the dielectric constant of all materials is larger than 1, that is, $\varepsilon \geq 1$, and materials with $\varepsilon \neq 1$ are called dielectrics.

Rocks in the formation have both conductive properties and dielectric properties. The formation can be regarded as a giant dielectric, and the conduction is completed by formation aqueous solution in pores, and the conduction of the aqueous solution is attributed to various ions dissolved therein. In the formation, such ions generally include $Na^+$, $Mg^{2+}$, $Ca^{2+}$, $K^+$, $Cl^-$, $OH^-$, $HCO_3^-$, $SO_4^{2-}$, $CO_3^{2-}$ and others, which form a conductive path of the formation. Therefore, the electric properties of rocks consist of two parts, one part consists of conductive properties of a path formed by aqueous solution communicated among pores, and the other part consists of dielectric properties presented by non-conductive materials and particles such as mineral particles of rocks, oil and gas molecules and water molecules. But in the formation, the current path whether conductive or dielectric will be affected by the pore geometry of rocks, the relationship between conductive and dielectric properties and pore structure of rocks has been described in lots of literatures in details, and will not be repeated here. Studies on the electric properties of rocks are mainly focused on conductive properties. In 1941, K.S.Cole and R.H.Cole established a dielectric constant Cole-Cole model, thereafter, a large number of scholars began to study the ionic conduction and polarization of rocks so as to analyze the characteristics of dielectric constant of heterogeneous porous media.

### Summary of the Invention

To this end, the inventor has made a great number of studies and experiments, and proposed a single ion capacitor, a micro capacitor and an ion capacitor (including a calculation method thereof). Macro permittivity of rocks can be calculated based on the concept and method, laying a theoretical foundation for further researching and developing particle charge-based well logging technology, and helping further study the change rules of rock capacitance, thus the invention has been prominently applied to electrical well logging technology.

The technical scheme adopted is as follows:

a single ion capacitor, characterized in that the single ion capacitor is a capacitor formed by using a single water molecule as a medium and having a single positive ion and a single negative ion on both ends of the single water molecule under the action of an electric field.

Further, the said single ion capacitor has a capacitance of $1.6 \times 10^{-7} pF$.

Preferably, the said single positive ion is a single sodium ion, and the said single negative ion is a single chloride ion.

A micro capacitor, characterized in that the said micro capacitor is a capacitor formed by using rock particles wrapping water films as a medium and having a single positive ion sheath and a single negative ion sheath on both ends of the rock particles wrapping water films under the action of an electric field.

Preferably, the said single positive ion sheath is a sodium ion sheath, and the said single negative ion sheath is a chloride ion sheath; and

An ion capacitor, comprising the said single ion capacitor and the said micro capacitor.

Preferably, the distance between the said positive ion and the said negative ion is the distance between conductive electrode plates, and ion capacitance of the said ion capacitor is in inverse proportion to distance square of the conductive electrode plates.

Further, the ion capacitor and the conductive electrode plates have the following relationship:

$$C_0 = \varepsilon_f \frac{A}{d^2}$$

Wherein, $C_0$ is ion capacitance, $\varepsilon_f$ is dielectric constant of fresh water or saline solution, the dimension of the $\varepsilon_f$ is F; A is the area of the conductive electrode plates; and d is the distance between the conductive electrode plates.

The proposed single ion capacitor, the micro capacitance and the ion capacitor comprising the single ion capacitor and the micro capacitor, as well as the further proposed inverse relationship between ion capacitance and the distance square of the conductive electrode plates can help further study the change rules of rock capacitance, and find new applications and breakthrough in electrical well logging.

**Brief Description of the Drawings**

To explain the technical scheme in the embodiments of the invention or in the prior art more clearly, figures required for description of the embodiments or prior art will be introduced briefly. Obviously, figures in the description below are only for embodiments of the invention, and other figures can be obtained by those of ordinary skill in the art without creative work based on the figures.

Fig. 1 is a structural diagram of a single ion capacitor;

Fig. 2 is a structural diagram of a micro capacitor;

Fig. 3 is a structural diagram of a capacitor;

Fig. 4 shows the relationship between capacitance and plate distance in NaCl solution of different salinities at different frequencies (measurement in a PVC pipe);

Fig. 5 shows the relationship between capacitance and plate distance in NaCl solution at different frequencies (measurement in a plastic box); and

Fig. 6 shows the relationship between resistance and plate distance in NaCl solution at different frequencies (measurement in a PVC pipe).

**Description of the Preferred Embodiments**

The technical scheme in the embodiments of the invention will be described in detail in combination with figures in the embodiments of the invention. Obviously, the embodiments to be described are only preferred embodiments of the invention, but not all embodiments. Based on the embodiments of the invention, all other embodiments obtained by those of ordinary skill in the art without creative work fall within the protection scope of the invention.

The conductive and dielectric capabilities of rocks depend on lots of different types of positive and negative ions dissolved in the aqueous solution. Generally, such ions can be equivalent to $Na^+$ and $Cl^-$, therefore, it is essential to study the conductive and dielectric properties of NaCl solution. The inventor knows that pure water molecules and oil and gas molecules are nonconductive, and conductive ions are like islands isolated by oil and gas molecules and water molecules. In the pore solution, there are a few free ions and many water molecules and hydrocarbon molecules in molecular states. If conductive $Na^+$ and $Cl^-$ are regarded as rivers, and nonconductive water molecules and oil and gas molecules are regarded as lands, such a model of "ion flux" and ""molecule land" is developed.

If an alternating electromagnetic field is applied on both ends of the rock, $I=I_0\sin(\omega t+\theta_0)$, free ions will make response to the electromagnetic field first, as a result, the ions will be arranged regularly. Under the action of an applied electric field, irons will move directionally, and will gradually gather on both ends of the rock through rock pores. Assuming that $Cl^-$ gathers on rock surface or borehole wall, and $Na^+$ gathers at the opposite end of the rock or the formation away from the borehole wall, an electric field is formed inside the rock. Such process shows the conductive properties of rocks.

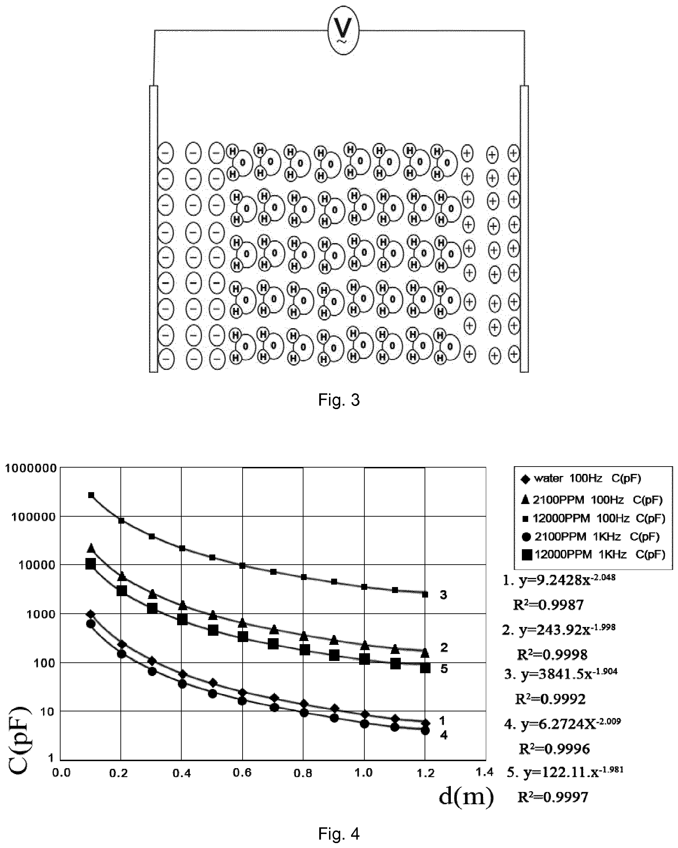

But as time goes on, conductive ions gather more close to both ends of the rock or formation, and nonconductive water molecules, oil and gas molecules and mineral molecules gather in the middle part. In the electrical well logging process, a relatively stable electric field will be established within a short period of time. In rock pores, the concentration of the free ions become smaller and smaller, thus the rock will show dielectric properties. Therefore, in electrical well logging, ion conducting sheaths formed by conductive ions serve as electrode plates, and nonconductive water molecules, hydrocarbon molecules and mineral molecules serve as a medium between the conductive electrode plates, thus making up a capacitor, as shown in Fig. 3 (the medium only shows water molecules).

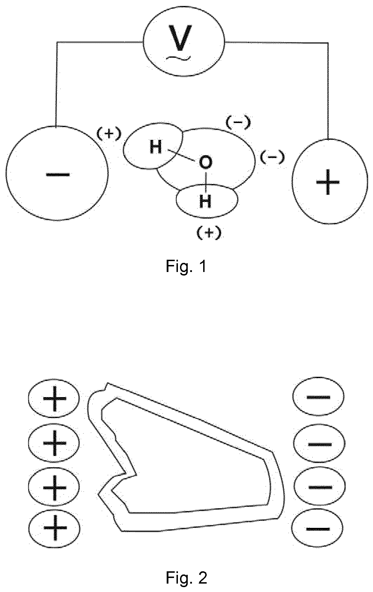

For dense rocks, pore channels are very narrow and have poor connectivity, free positive and negative irons gather at both ends of rock particles in water wetting phase, and the water films and rock particles are nonconductive media, thus forming a micro capacitor consisting of 1 or n paired ions. More than one such micro capacitor may form in the formation, the micro capacitor is a capacitor formed by using rock particles wrapping water films as a medium and having a single positive ion sheath and a single negative ion sheath on both ends of the rock particles wrapping water films under the action of an electric field, as shown in Fig. 2. The capacitors can be communicated or not communicated.

Generally, the diameter of $Na^+$ is 0.95Å, the diameter of $Cl^-$ is 1.81 Å, and the diameter of $H^+$ is 2.08 Å. The pore channels of rocks are distributed from a few microns to a dozen of microns, the thickness of water films is less than $1\mu m$, and the space for ion migration is tens of thousands of times the ion volume, by order of magnitudes of $10^4$. Tens of thousands of positive and negative ions may be distributed and gather on both ends of rock particles in water wetting phase, forming a micro capacitor using sodium ions and chloride ions as electrode plates, and rock particles wrapping a certain thickness of water films as a medium. Although the permittivity cannot be accurately calculated at present, some theoretical speculations can be made.

If rock pores are very small and not communicated, a separate capacitor using water molecules as dielectric may be formed. In extreme situations where a capacitor is formed by a single iron and a single water molecule, the capacitor is formed by using a single water molecule as a medium and having a single positive ion and a single negative ion on both ends of the single water molecule under the action of an electric field, such capacitor is called single ion capacitor, as shown in Fig. 1. According to the definition of capacitor, if the applied electric field applies 1V electric field strength, the capacitance of the single iron capacitor is:

$$C = \frac{Q}{V} = \frac{1.6 \times 10^{-19} C}{1v} = 1.6 \times 10^{-19} F = 1.6 \times 10^{-7} pF$$

The change rules of an iron capacitor in aqueous solution as the medium will be studied through some experiments below. The ion capacitor comprises the said micro capacitor and the single ion capacitor, which helps further study the change rules of rock capacitance.

Experimental apparatus and steps

1. Measuring apparatus

A PVC pipe with a diameter of 2.5cm and a length of 150cm was used, the PVC pipe was used to test the change rules of medium resistance and capacitance at different distances, different salinities and different frequencies. A plastic container (L×W×H=17cm×5.0cm×4.7cm) filled with sand from riverside was used. The sand was screened with little change in particles, and uniformly placed in the container. The plastic container was used to simulate underground rocks so as to measure the change rules of medium resistance and capacitance of rocks at different distances, different salinities and different frequencies. The measuring apparatus used was a Japan HIOKI IM3570 LCR analyzer.

2. Experimental steps

In the measurement, the PVC pipe was filled with a certain amount of fresh water, a measuring electrode plate was fixed to one end of the pipe, and a movable electrode plate was placed on the other end, which moved up and down with the amount of fresh water filled so as to measure changes in capacitance of the fresh water aqueous solution. Then industrial salt was used to prepare 0.2g/L and 1.2g/L NaCl saline solutions respectively. The changes in resistance and capacitance of the saline solutions at different salinities (salt concentration) were measured according to the said method. Two frequency points (100Hz and 1 kHz) were used for measurement, and the measurement results were listed in Table 1 and Table 2.

**Table 1**

| d (m) | water | 0.2g/L | 1.2g/L | 0.2g/L | 1.2g/L |
|-------|-------|--------|--------|--------|--------|
| | 100Hz C(pF) | | | 1kHz C(pF) | |
| 0.1 | 970 | 23500 | 286000 | 642 | 11200 |
| 0.2 | 252 | 6170 | 83800 | 160 | 3010 |

(continued)

| d (m) | water | 0.2g/L | 1.2g/L | 0.2g/L | 1.2g/L |
|---|---|---|---|---|---|
| | 100Hz C(pF) | | | 1kHz C(pF) | |
| 0.3 | 112 | 2730 | 39900 | 71 | 1340 |
| 0.4 | 61 | 1550 | 22500 | 39 | 763 |
| 0.5 | 41 | 976 | 15100 | 24 | 491 |
| 0.6 | 25 | 694 | 10300 | 18.1 | 345 |
| 0.7 | 21 | 510 | 7730 | 13 | 248 |
| 0.8 | 15 | 371 | 5760 | 10 | 192 |
| 0.9 | 12 | 303 | 4820 | 8 | 153 |
| 1.0 | 9 | 241 | 3740 | 6 | 121 |
| 1.1 | 7 | 201 | 3150 | 5 | 98 |
| 1.2 | 6 | 165 | 2550 | 4.5 | 82 |

**Table 2**

| d (m) | water | 0.2g/L | 1.2g/L | 0.2g/L | 1.2g/L |
|---|---|---|---|---|---|
| | 100Hz R(k$\Omega$) | | | 1kHz R(k$\Omega$) | |
| 0.1 | 23.10 | 3.19 | 0.56 | 3.08 | 0.51 |
| 0.2 | 45.10 | 6.24 | 1.01 | 6.14 | 0.96 |
| 0.3 | 67.45 | 9.35 | 1.47 | 9.25 | 1.43 |
| 0.4 | 90.44 | 12.42 | 1.92 | 12.32 | 1.88 |
| 0.5 | 113.00 | 15.56 | 2.38 | 15.46 | 2.34 |
| 0.6 | 136.00 | 18.61 | 2.85 | 18.50 | 2.81 |
| 0.7 | 159.00 | 21.77 | 3.30 | 21.67 | 3.26 |
| 0.8 | 183.00 | 24.90 | 3.78 | 24.79 | 3.74 |
| 0.9 | 205.00 | 27.92 | 4.22 | 27.82 | 4.18 |
| 1.0 | 228.00 | 31.10 | 4.69 | 30.96 | 4.65 |
| 1.1 | 253.00 | 34.21 | 5.15 | 34.10 | 5.12 |
| 1.2 | 277.00 | 37.30 | 5.61 | 37.20 | 5.57 |

Water in Table 1 and Table 2 was fresh water.

A 17cm long, 5.0cm wide and 4.7cm high plastic box was filled with washed and screened river sand. The river sand was washed to remove impurities, and screened to try to keep the measured medium homogeneous. Then the plastic box was filled with saline water of a certain concentration, and two electrode plates with area smaller than $5.0 \times 4.7 cm^2$ were placed on both ends of the plastic box. One electrode plate was fixed, and the other one was movable. While changing the distance between the electrode plates and the measuring frequency, the changes in resistance and capacitance of sand in the salt-containing solution were measured by sweep frequency method in the range of 4Hz-5MHz. The measurement results were listed in Table 3.

**Table 3**

| Distance (cm) | 17 | 15 | 13 | 10 | 8 | 5 | 3 | 2 |
|---|---|---|---|---|---|---|---|---|
| Frequency (Hz) | Rp8 (Ω) | Rp7 | Rp6 | Rp5 | Rp4 | Rp3 | Rp2 | Rp1 |
| 4.0 | 166.82 | 164.19 | 159.99 | 154.14 | 150.96 | 146.52 | 142.20 | 134.65 |
| 10.2 | 117.21 | 112.90 | 107.84 | 101.02 | 96.52 | 91.65 | 88.57 | 86.57 |
| 70.1 | 74.19 | 68.56 | 62.39 | 53.82 | 48.10 | 40.71 | 36.58 | 34.78 |
| 286.8 | 61.90 | 55.98 | 49.41 | 40.09 | 33.74 | 24.91 | 19.77 | 17.49 |
| 1019.1 | 57.69 | 51.65 | 44.95 | 35.38 | 28.75 | 19.24 | 13.25 | 10.33 |
| Frequency (Hz) | Cp8 (pF) | Cp7 | Cp6 | Cp5 | Cp4 | Cp3 | Cp2 | Cp1 |
| 4.0 | 139.87 | 179.42 | 238.50 | 421.94 | 636.53 | 1595.87 | 4408.82 | 9876.90 |
| 10.2 | 70.56 | 89.32 | 118.89 | 210.83 | 313.67 | 802.32 | 2228.62 | 5006.24 |
| 70.1 | 6.95 | 8.92 | 12.87 | 20.06 | 31.33 | 80.17 | 228.54 | 500.45 |
| 286.8 | 1.40 | 1.79 | 2.38 | 4.01 | 6.04 | 15.83 | 43.58 | 97.35 |
| 5029.1 | 0.01 | 0.02 | 0.02 | 0.04 | 0.06 | 0.16 | 0.43 | 0.98 |

In addition, resistance and capacitance data of the saline solution at different salinities were measured in the frequency range of 4Hz-5MHz. As the data size was large, only some measurement results were listed in Table 4 and Table 5.

**Table 4**

| No. | Salinity (g/L) | 1.5625 | 3.125 | 6.25 | 12.5 | 25 | 50 | 100 | 200 |
|---|---|---|---|---|---|---|---|---|---|
| | Frequency (Hz) | Rp8 (Ω) | Rp7 | Rp6 | Rp5 | Rp4 | Rp3 | Rp2 | Rp1 |
| 1 | 4.0 | 793.7 | 466.4 | 283.1 | 188.0 | 127.0 | 87.3 | 65.2 | 61.0 |
| 10 | 6.1 | 764.3 | 441.6 | 262.4 | 170.0 | 114.0 | 78.7 | 58.6 | 54.6 |
| 20 | 9.8 | 739.5 | 419.9 | 244.1 | 154.0 | 101.0 | 69.3 | 51.5 | 47.8 |
| 50 | 39.9 | 700.3 | 383.4 | 211.8 | 123.0 | 73.8 | 46.8 | 32.5 | 30.2 |
| 60 | 63.9 | 694.3 | 377.8 | 206.7 | 118.0 | 69.2 | 42.4 | 28.3 | 26.0 |
| 70 | 102.1 | 690.5 | 374.0 | 203.2 | 115.0 | 66.1 | 39.4 | 25.3 | 23.1 |
| 100 | 417.6 | 685.1 | 368.7 | 198.0 | 110.0 | 61.7 | 35.4 | 21.2 | 18.6 |
| 130 | 1708.0 | 683.5 | 367.2 | 196.5 | 109.0 | 60.3 | 34.2 | 20.0 | 16.4 |
| 150 | 4368.4 | 683.1 | 366.8 | 196.2 | 108.0 | 60.0 | 33.9 | 19.7 | 15.2 |
| 180 | 17867.0 | 682.6 | 366.6 | 196.0 | 108.0 | 59.8 | 33.7 | 19.5 | 13.8 |
| 193 | 32895.0 | 682.3 | 366.5 | 195.9 | 108.0 | 59.8 | 33.7 | 19.5 | 13.4 |
| 200 | 45695.0 | 682.0 | 366.4 | 195.9 | 108.0 | 59.8 | 33.6 | 19.5 | 13.2 |
| 230 | 186900.0 | 680.3 | 366.0 | 195.8 | 108.0 | 59.8 | 33.7 | 19.5 | 12.9 |
| 260 | 764420.0 | 673.6 | 364.0 | 195.2 | 108.0 | 59.9 | 33.9 | 19.9 | 13.3 |
| 280 | 1955000.0 | 655.9 | 357.2 | 192.7 | 107.0 | 59.8 | 34.6 | 21.5 | 15.8 |
| 300 | 5000000.0 | 573.6 | 322.1 | 177.8 | 101.0 | 58.6 | 37.5 | 28.5 | 29.2 |

**Table 5**

| No. | Salinity (g/L) | 1.562 5 | 3.125 | 6.25 | 12.5 | 25 | 50 | 100 | 200 |
|-----|----------------|---------|-------|------|------|-----|-----|------|------|
|     | Freque ncy (Hz) | Cp8 (nF) | Cp7 | Cp6 | Cp5 | Cp4 | Cp3 | Cp2 | Cp1 |
| 1 | 4.0 | 8314. 8 | 19465 .4 | 43178 .7 | 82300 .0 | 136000 .0 | 213000 .0 | 303000 .0 | 343413 .0 |
| 10 | 6.1 | 4750. 1 | 11582. 0 | 26972 .5 | 55200 .0 | 96900. 0 | 157000 .0 | 228000 .0 | 260258 .8 |
| 20 | 9.8 | 2430. 2 | 6244. 3 | 15338 .8 | 33500 .0 | 63900. 0 | 108000 .0 | 165000 .0 | 187110 .2 |
| 50 | 39.9 | 267.6 | 766.3 | 2118.6 | 5420. 0 | 12800. 0 | 27500. 0 | 52700. 0 | 61359. 3 |
| 60 | 63.9 | 123.0 | 361.4 | 1027. 1 | 2670. 0 | 6660.0 | 15300. 0 | 31800. 0 | 38316. 0 |
| 70 | 102.1 | 55.3 | 166.0 | 485.6 | 1290. 0 | 3300.0 | 7970.0 | 17800. 0 | 22487. 9 |
| 100 | 417.6 | 4.8 | 14.8 | 46.4 | 131.0 | 355.0 | 908.0 | 2280.0 | 3798.5 |
| 130 | 1708.0 | 0.45 | 1.26 | 3.99 | 11.70 | 33.50 | 89.70 | 234.00 | 768.23 |
| 150 | 4368.4 | 0.12 | 0.27 | 0.78 | 2.26 | 6.57 | 18.10 | 48.30 | 272.05 |
| 180 | 17867.0 | 0.04 | 0.05 | 0.08 | 0.17 | 0.45 | 1.16 | 3.11 | 49.87 |
| 193 | 32895.0 | 0.04 | 0.04 | 0.04 | 0.04 | 0.07 | 0.08 | 0.12 | 20.45 |
| 200 | 45695.0 | 0.03 | 0.03 | 0.03 | 0.01 | -0.02 | -0.16 | -0.58 | 11.58 |
| 230 | 186900. 0 | 0.03 | 0.02 | 0.01 | -0.03 | -0.12 | -0.44 | -1.35 | -1.81 |
| 260 | 764420. 0 | 0.03 | 0.02 | 0.01 | -0.03 | -0.12 | -0.43 | -1.25 | -2.94 |
| 280 | 195500 0.0 | 0.02 | 0.02 | 0.01 | -0.03 | -0.12 | -0.40 | -1.09 | -2.44 |
| 300 | 500000 0.0 | 0.02 | 0.02 | 0.00 | -0.03 | -0.13 | -0.37 | -0.74 | -1.32 |

In Table 3 to Table 5, distance is the distance between the electrode plates, Frequency is frequency, and Salinity is the concentration of the saline solution.

3. Analysis of experimental results

Obviously, medium resistance and capacitance changed with the changes in the plate distance, solution salinity and measuring frequency. Analysis was performed in the following aspects.

3.1 The relationship between conductive and dielectric properties and plate distance

For the results of measurement in the PVC pipe, the relationships between dielectric resistance and capacitance and plate distance and salinity were analyzed. As shown in Fig. 4, the relationships between capacitance and plate distance at 100Hz and 1KHz in 0.2g/L and 1.2g/L NaCl solutions and fresh water in the PVC circular pipe were plotted. The following rules were evident in Fig. 4:

(1) when other conditions remained unchanged, the higher the salinity was, the larger the capacitance was;

(2) when other conditions remained unchanged, the higher the frequency was, the smaller the capacitance was; and

(3) when other conditions remained unchanged, the capacitance of a capacitor using fresh water or saline solution as the medium was in inverse proportion to the distance, in an approximate inverse square relationship.

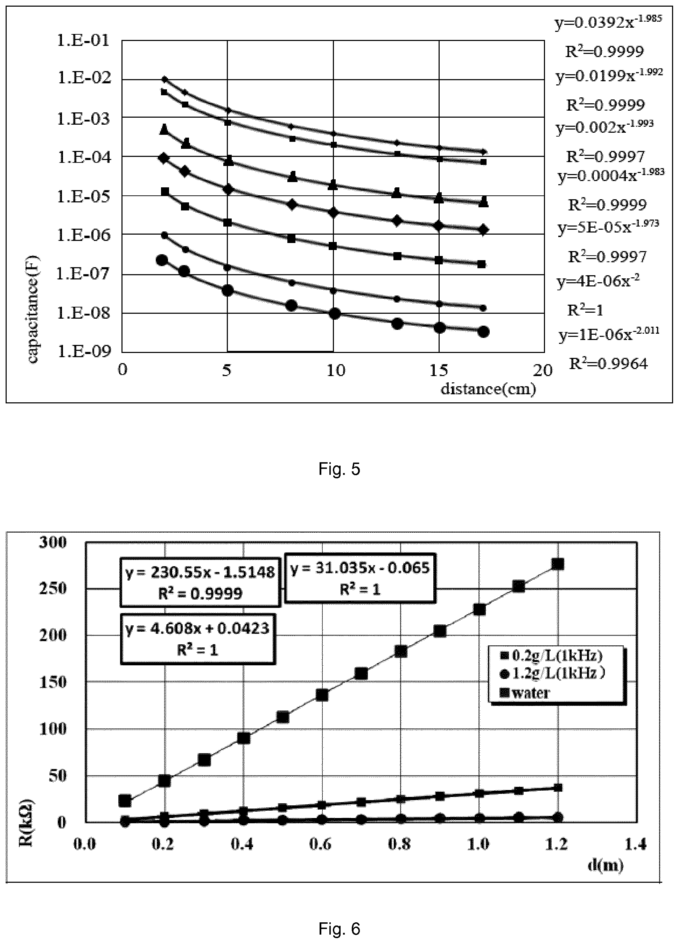

The change curve of sand capacitance of salt-containing solution in the plastic container was plotted in Fig. 5. It was evident in Fig. 5 that the three change rules were still met. It was especially confusing that the capacitance was in inverse proportion to the distance square.
In order to verify the reliability of the experimental results, the same analysis was performed on resistivity, and the relationships between resistance and salinity, measuring frequency and distance were plotted in Fig. 6. It was clearly that resistance is in direct proportion to distance, which was consistent with the existing physical rules. In order to further prove the approximate inverse square relationship between capacitance of capacitors using solutions as media and distance, the inventor made lots of tests for different capacitors at different temperatures, different concentrations, different frequencies and various changing conditions, and the results were basically the same. Therefore, the invention got a new understanding that:

(1) capacitors using solutions as media were in inverse proportion to distance square.

The rule is inconsistent with existing parallel plate capacitors. A comparison is made below.
According to traditional physical rules, the calculation formula of a parallel plate capacitor is expressed as:

$$(1) \quad C_0 = \varepsilon_0 \frac{A}{d}$$

wherein, A: area of parallel plate electrodes, d: distance between parallel plate electrodes; $\varepsilon_0$: vacuum dielectric constant.
According to the rules obtained through previous analysis, the calculation formula of a liquid-dielectric capacitor is expressed as:

$$(2) \quad C_0 = \varepsilon_f \frac{A}{d^2}$$

then:

$$(3) \quad \varepsilon_f = C_0 \frac{d^2}{A}$$

$\varepsilon_f$ is the dielectric constant of fresh water or saline solution, unlike vacuum dielectric constant, through analysis by dimension, the dimension of $\varepsilon_f$ is F.

It is confirmed through multiple experiments that the capacitance of liquid-dielectric and solid-dielectric capacitors is in inverse proportion to the square of plate distance, which is different from common parallel plate capacitors. The changing rule may be attributed to the more complex polarization and relaxation mechanism of liquid or solid.

The above mentioned embodiments are only preferred embodiments of the invention and not used to limit the invention. Any modification, equivalent replacement and improvement made within the spirit and rule of the invention can be incorporated in the protection scope of the invention.

**Claims**

1. A single ion capacitor, **characterized in that** the single ion capacitor is a capacitor formed by using a single water molecule as a medium and having a single positive ion and a single negative ion on both ends of the single water molecule under the action of an electric field.

2. The said single ion capacitor of Claim 1, **characterized in that** the said single ion capacitor has a capacitance of $1.6 \times 10^{-7}$ pF.

3. The said single ion capacitor of Claim 1, **characterized in that** the said single positive ion is a single sodium ion, and the said single negative ion is a single chloride ion.

4. A micro capacitor, **characterized in that** the said micro capacitor is a capacitor formed by using rock particles wrapping water films as a medium and having a single positive ion sheath and a single negative ion sheath on both ends of the rock particles wrapping water films under the action of an electric field.

5. The said micro capacitor of Claim 4, **characterized in that** the said single positive ion sheath is a sodium ion sheath, and the said single negative ion sheath is a chloride ion sheath.

6. An ion capacitor, **characterized in that** the said ion capacitor comprises the single ion capacitor of Claim 1 and the micro capacitor of Claim 4.

7. The said ion capacitor of Claim 6, **characterized in that** the distance between the said positive ion and the said negative ion is the distance between conductive electrode plates, and ion capacitance of the said ion capacitor is in inverse proportion to distance square of the conductive electrode plates.

8. The said ion capacitor of Claim 7, **characterized in that** the ion capacitor and the conductive electrode plates have the following relationship:

$$C_0 = \varepsilon_f \frac{A}{d^2}$$

Wherein, $C_0$ is ion capacitance, $\varepsilon_f$ is dielectric constant of fresh water or saline solution, the dimension of the $\varepsilon_f$ is F; A is the area of the conductive electrode plates; and d is the distance between the conductive electrode plates.

Fig. 1

Fig. 2

Fig. 3

1. $y=9.2428x^{-2.048}$
   $R^2=0.9987$
2. $y=243.92x^{-1.998}$
   $R^2=0.9998$
3. $y=3841.5x^{-1.904}$
   $R^2=0.9992$
4. $y=6.2724X^{-2.009}$
   $R^2=0.9996$
5. $y=122.11.x^{-1.981}$
   $R^2=0.9997$

Fig. 4

Fig. 5

Fig. 6

# INTERNATIONAL SEARCH REPORT

| International application No. |
|---|
| **PCT/CN2015/082491** |

**A. CLASSIFICATION OF SUBJECT MATTER**

H01G 9/00 (2006.01) i

According to International Patent Classification (IPC) or to both national classification and IPC

**B. FIELDS SEARCHED**

Minimum documentation searched (classification system followed by classification symbols)

H01G

Documentation searched other than minimum documentation to the extent that such documents are included in the fields searched

Electronic data base consulted during the international search (name of data base and, where practicable, search terms used)

CNABS, CJFD, CNTXT, DWPI: ion, hydronium, capacitance, positive, negative, rock, electric field

**C. DOCUMENTS CONSIDERED TO BE RELEVANT**

| Category* | Citation of document, with indication, where appropriate, of the relevant passages | Relevant to claim No. |
|---|---|---|
| X | LIU, Hongqi et al., "A Study of a New Method of Exploration Based on Reservior Capacitivity", ADVANCES IN EARTH SCIENCE, vol. 24, no. 9, 30 September 2009 (30.09.2009), ISSN: 1001-8166, sections 2-3 | 1-8 |
| A | LI, Jianjun et al., "Effect of Clay Sandstones Contents on Core's Dielectric Constant", WELL LOGGING TECHNOLOGY, vol. 29, no. 6, 31 December 2005 (31.12.2005), ISSN: 1004-1338, the whole document | 1-8 |
| A | SHI, Xiandi et al., "Dielectric Properties of Reservoir Rocks at Very-high Frequencies and Test Method Thereof", CHINESE JOURNAL OF GEOPHYSICS, vol. 32, no. 1, 31 January 1989 (31.01.1989), ISSN: 0001-5733, the whole document | 1-8 |

☐ Further documents are listed in the continuation of Box C.     ☐ See patent family annex.

| | | |
|---|---|---|
| \*    Special categories of cited documents: | "T" | later document published after the international filing date or priority date and not in conflict with the application but cited to understand the principle or theory underlying the invention |
| "A"   document defining the general state of the art which is not considered to be of particular relevance | | |
| "E"   earlier application or patent but published on or after the international filing date | "X" | document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O"   document referring to an oral disclosure, use, exhibition or other means | | |
| "P"   document published prior to the international filing date but later than the priority date claimed | "&" | document member of the same patent family |

| Date of the actual completion of the international search | Date of mailing of the international search report |
|---|---|
| 18 March 2016 (18.03.2016) | **28 March 2016 (28.03.2016)** |

| Name and mailing address of the ISA/CN: <br> State Intellectual Property Office of the P. R. China <br> No. 6, Xitucheng Road, Jimenqiao <br> Haidian District, Beijing 100088, China <br> Facsimile No.: (86-10) 62019451 | Authorized officer <br><br> **SUN, Zehong** <br><br> Telephone No.: (86-10) **62412082** |

Form PCT/ISA/210 (second sheet) (July 2009)